# EUROPEAN PATENT APPLICATION

(11) **EP 0 979 858 A2**
(43) Date of publication of application: **16.02.2000**
(21) Application number: 99114673.9
(22) Date of filing: 27.07.1999
(51) Int. Cl.: C10K 1/08

(54) **Reducing methanol emissions from a syngas unit**

(30) Priority: 13.08.1998 US 133477
(71) Applicant: Kellogg Brown & Root, Inc., Houston, Texas 77002-7990 (US)
(72) Inventor: Joshi, Girish Chimanlal, Sugar Land, Texas 77479 (US); Noe, Stephen Allen, Tomball, Texas 77375 (US)
(74) Representative: Weiss, Wolfgang, Dipl.-Chem. Dr.

(57) **Abstract**

Methanol emissions in the CO₂ vent from a synthesis gas unit in an ammonia or hydrogen plant are reduced by contacting raw synthesis gas from a low temperature shift converter with recycled stripped condensate to absorb methanol. The synthesis gas is treated in a purification unit to form the CO₂ vent of reduced methanol content. The condensate from the contacting step is steam stripped to form a process steam stream suitable for feed to the reformer and a stripped process condensate stream suitable for offsites polishing, a portion of which is recycled for contacting the raw synthesis gas.

## Description

The present invention relates to the reduction of methanol emissions from a purification unit vent in synthesis gas generation units using low temperature shift catalyst.

### BACKGROUND OF THE INVENTION

There is an ongoing desire to reduce atmospheric emissions from chemical plants, and particularly methanol emissions associated with ammonia plants. Reducing such methanol emissions has become critical for both new units and existing units undergoing revamps.

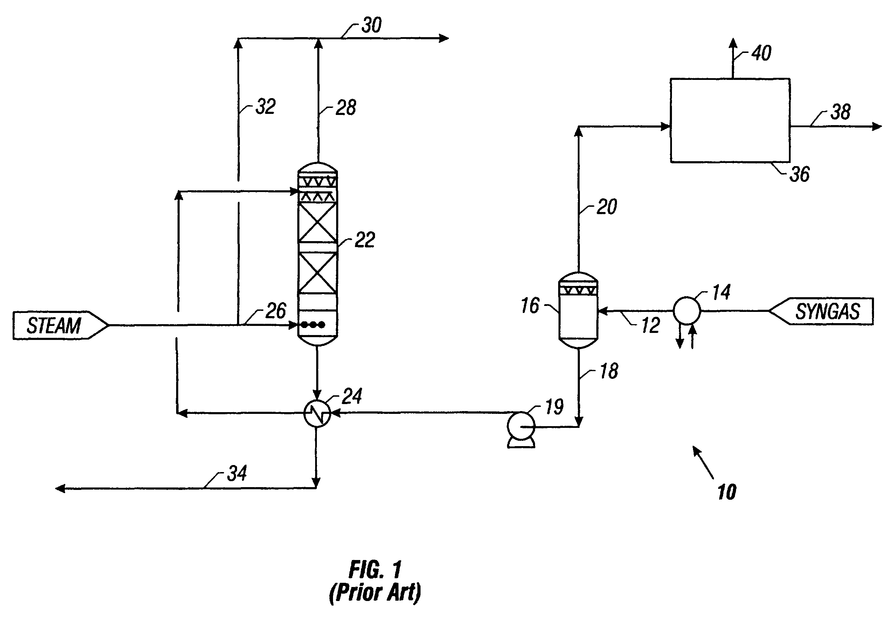

With reference to Fig. 1, in the prior art synthesis gas generation unit **10**, such as in an ammonia or hydrogen plant, a hydrogen-rich stream **12** is supplied from a low temperature shift converter (not shown). The low temperature shift catalyst in the converter is typically used to improve shift reaction conversion of carbon monoxide and water to carbon dioxide (CO₂) and hydrogen. This service typically employs a copper-based catalyst which under typical conditions of operation supports some formation of by-products such as methanol from the reactants which are present. Downstream of the shift section, the process stream **12** is cooled in cooler **14** to condense water which is separated from the gas in knock-out drum **16** to form condensate stream **18** and overhead gas stream **20**. The condensed process condensate which has a typical methanol content of 500-1000 ppmw is sent to a condensate stripper **22** after heating in condensate stripper feed/effluent heat exchanger **24**. Fresh steam is supplied in line **26** to strip contaminants such as ammonia, methanol and higher alcohols and CO₂ from the condensed process condensate in condensate stripper **22**. Steam containing the contaminants is recovered overhead via line **28** and supplied to a steam reformer (not shown) via line **30** along with steam by-passing the condensate stripper **22** via line **32**. Stripped condensate is recovered as a bottoms stream from condensate stripper **22** via line **34** and can be polished offsite or otherwise processed.

Methanol present in the process gas in line **20** is sent to a purification unit **36** for removal of CO₂ and/or other non-desirable components in the syngas product. The purification unit **36** is typically an absorber-stripper system or a mole sieve system such as a pressure-swing adsorption (PSA) unit. Purified syngas is obtained in line **38**. The methanol comes out in a CO₂ -rich overhead product stream **40**. In many cases, at least a part of this CO₂ stream **40** is vented to the atmosphere along with any methanol which may be present therein.

It would be desirable to have available a way of reducing the methanol emissions in the CO₂ from the purification unit **36**. Ideally, the means for reducing the methanol emissions would minimize additional equipment requirements, would have a minor impact on plant energy consumption, and would not produce solid contaminants which require disposal. Conventional methanol reduction technology such as end-of-pipe catalytic reactors, or alternatively refrigerating the raw syngas to increase methanol separation in knock-out drum **16**, do not meet these criteria. The end-of-pipe catalytic reactor requires a blower, a heater (for start-up purposes) and an oxidation reactor, and produces spent catalyst which must be disposed of. Refrigerating the raw syngas would require refrigeration equipment and severe power consumption. Therefore, a need exists for an acceptable way of reducing the methanol emissions.

### SUMMARY OF THE INVENTION

The present invention removes most of the methanol from the synthesis gas exiting the knock-out drum, thereby reducing emissions from the carbon dioxide overhead product from the purification unit. The bottoms stream from the condensate stripper generally has a methanol level which is quite low. According to the present invention, some of this stripped condensate is recycled to the knock-out drum upstream of the purification unit. Also, the knock-out drum is expanded to incorporate a wash section comprising packing or trays above the main process gas inlet. The recycled stripped condensate is then introduced as a scrubbing medium to the top of the wash section in the knock-out drum. Process gas exiting the wash section will therefore be near equilibrium with water having a very low methanol content, rather than the 500 to 1000 ppmw methanol that was present in the condensed process condensate before recycle of the stripped condensate stream. Methanol emissions to the atmosphere from the CO₂ vent will therefore be reduced accordingly. The additional methanol removed ends up in the steam feed to the reformer so that it is not released into the atmosphere.

Unlike other potential options to treat the CO₂ vented from the stripper, the proposed design adds no new equipment. Items in the recycling process circuit will see some increase in size, such as the process condensate pump, condensate stripper, stripper feed/effluent exchanger and the knock-out drum. However, increasing the size of existing equipment rather than adding new equipment typically resuits in minimum cost. In addition, the impact on plant energy consumption is very minor. There is a slight increase in air and mixed feed preheat coil duties in the reformer, due to a slight decrease in steam feed temperature. However, this is somewhat offset by a reduction in process steam extracted from the steam header.

In one aspect, then, the present invention provides a method for processing a raw synthesis gas stream to minimize methanol emissions. The method comprises contacting the raw synthesis gas stream with stripped condensate to form an overhead synthesis gas stream of reduced methanol content and a condensate stream enriched in methanol. The methanol-enriched condensate stream is steam stripped to form a process steam stream enriched in methanol and a stripped condensate stream of reduced methanol content. A portion of the stripped condensate stream is recirculated to the contacting step. The overhead synthesis gas stream is treated in a purification unit to form a CO₂-rich stream essentially free of methanol and a synthesis gas stream of reduced CO₂ content.

In another aspect, the present invention provides a unit for processing raw synthesis gas to produce a synthesis gas stream of reduced water and CO₂ content, a CO₂ stream of low methanol content, a stripped condensate stream essentially free of hydrocarbons and other impurities, and a process steam stream suitable for feed to a reformer. The unit has a raw gas separator including a methanol wash bed for contacting a raw synthesis gas stream with stripped condensate to form an overhead synthesis gas stream of reduced methanol content and a condensate stream enriched with methanol. A process condensate stripper is provided for contacting the methanol-enriched condensate stream with steam to form a process steam stream overhead and a bottoms stream comprising stripped condensate. A line recirculates a portion of the stripped condensate stream from the process condensate stripper to the raw gas separator. A purification unit treats the overhead synthesis gas stream from the raw gas separator to form a CO₂-lean synthesis gas stream and a CO₂-rich stream of low methanol content.

In a further aspect, the present invention provides an improvement in a method for processing a raw synthesis gas stream comprising the steps of (1) separating condensate from the raw synthesis gas stream to produce a condensate stream and a synthesis gas stream of reduced water content, (2) treating the synthesis gas stream in a purification unit to form a CO₂-lean synthesis gas stream and a CO₂-rich product stream, and (3) steam stripping the condensate stream from step (1) to form a process steam stream suitable for reforming and a stripped process condensate stream. The improvement is that the separating step (1) includes contacting the raw synthesis gas stream with a portion of the stripped process condensate stream effective to substantially reduce the methanol content of the CO₂ product stream from step (2).

### BRIEF DESCRIPTION OF THE DRAWINGS

Fig. 1 is a simplified process diagram of the prior art method for processing a raw synthesis gas stream to produce a synthesis gas stream of reduced water and CO₂ content, a CO₂ stream, a stripped condensate stream essentially free of hydrocarbons and other impurities, and a process steam stream suitable for feed to a reformer.
Fig. 2 is a simplified process flow diagram according to the present invention wherein the process of Fig. 1 is modified so that the CO₂ stream has a substantially reduced methanol content.
Fig. 3 is a simplified process flow diagram showing a typical absorber-stripper unit suitable as one embodiment of the purification unit **124** in Fig. 2.

### DESCRIPTION OF THE INVENTION

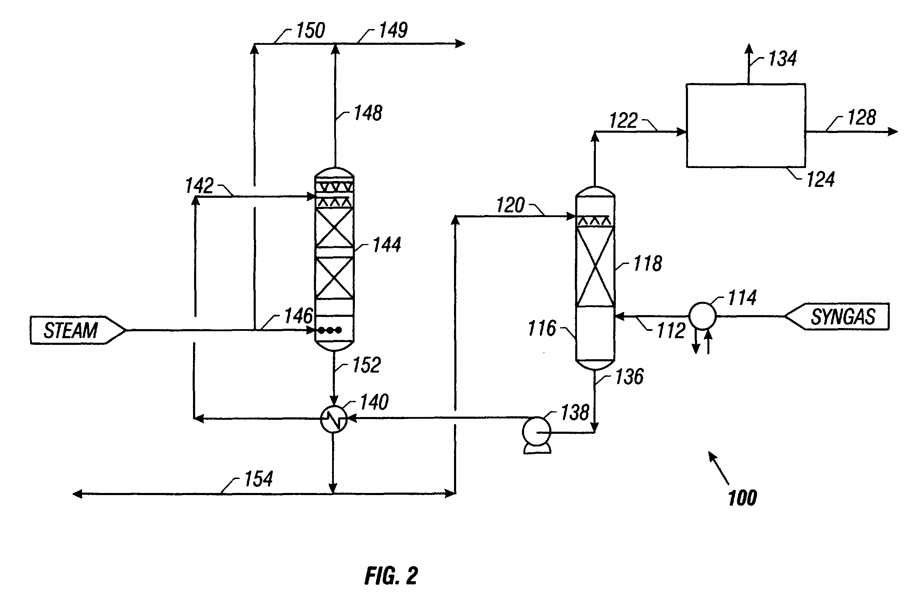

According to one embodiment of the present invention shown in Fig. 2, the unit **100** receives synthesis gas stream **112** supplied from a conventional low temperature shift converter which usually employs a copper-based catalyst. The catalyst typically results in the formation of some by-products such as ammonia, methanol and higher alcohols. The syngas stream **112** is basically the same as the syngas stream **12** in Fig. 1.

The syngas stream **112** is cooled in cooler **114** by indirect heat exchange with cooling water or a process stream, for example. The cooled syngas stream from the cooler **114** is a two-phase stream containing some process condensate. This two-phase stream is supplied to a separator **116**. The condensate is collected at the bottom of the separator **116**, while the gas proceeds upwardly through a water wash section **118**. Stripped condensate is introduced to the top of the wash section **118** via line **120**.

The stripped condensate in line **120** is essentially free of methanol, for example, less than 100 ppmw, especially less than 25 ppmw methanol. The stripped condensate introduced via line **120** serves as a scrubbing medium in the wash section **118**. Process gas exiting the wash section **118** is generally near equilibrium with the stripped condensate containing less than 25 ppmw methanol, rather than about 500 to 1000 ppmw methanol which is present in the condensed process condensate in the two-phase stream from the cooler **114**. The methanol content in overhead gas stream **122** is thus reduced by more than 90%.

The overhead gas stream **122** from the wash section **118** is introduced to the purification unit **124** for removal of CO₂, methanol and other impurities. The purification unit **124** can be any conventional purification system employed for CO₂ removal, such as, for example a Benfield solution or MDEA absorption-stripping system, or a mole-sieve based unit such as a pressure-swing adsorption system. Treated syngas product stream **128** is essentially free of CO₂ and methanol. A CO₂ stream **134** is produced which typically contains any methanol carried over in line **122**.

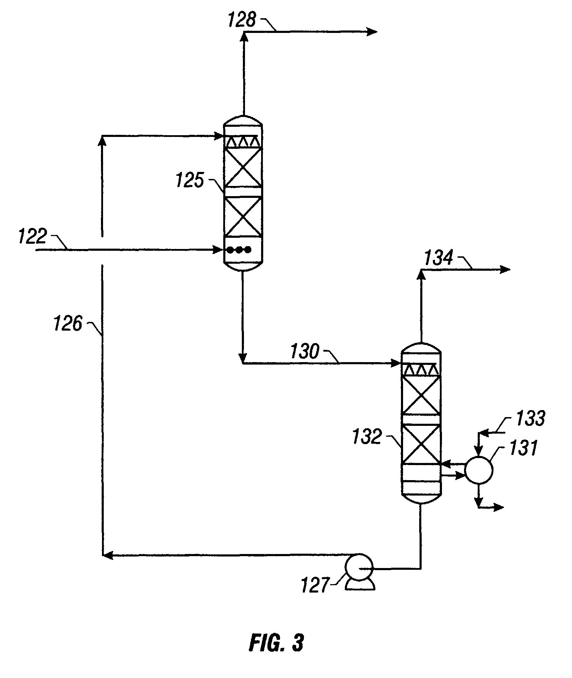

With reference to the absorption-stripping system shown in Fig. 3, the overhead gas stream **122** from the wash section **118** is introduced to the bottom of CO₂ absorber **125**. Lean absorbent is introduced to the top of the absorber **125** via line **126** and pump **127**. The absorbent passing down through the absorber **125** contacts the gas and absorbs CO₂ therefrom. An overhead product stream **128** is essentially free of CO₂ and methanol which is absorbed in the absorbent medium. A CO₂-rich absorbent is recovered as a bottoms product stream **130** and introduced to the top of a stripper **132** which is conventionally heated via reboiler **131** and steam or hot syngas supplied via line **133**, and may also operate at a lower pressure than the absorber **125**. A CO₂ overhead stream **134** is produced which typically contains any methanol carried over in line **130**. A CO₂-lean stream is recovered as a bottoms product from the stripper **132** for recycle via line **126** and pump **127** to the absorber **125**.

Referring again to Fig. 2, the liquid bottoms stream **136** is supplied by pump **138** through condensate stripper/feed effluent heat exchanger **140** and line **142** to the top of condensate stripper **144**. Steam, preferably superheated steam, is introduced in line **146** to the bottom of the stripper **144** to strip impurities from the condensate which are carried overhead in saturated steam line **148**. Additional steam required for the reformer (not shown) is supplied in stripper bypass line **150**. Stripped condensate is collected from the bottom of the stripper **144** in line **152** and cooled in heat exchanger **140** to heat the incoming process condensate in line **142**. A portion of the stripped condensate is sent to the separator **116** via line **120** as previously mentioned and the remainder can be sent to further processing via line **154**, for example, offsites polishing.

Generally, from 10 to 50 percent of the stripped condensate in line **152** is recycled via line **120** to the top of the water wash section **118**, preferably from 20 to 40 percent. In general, the more stripped condensate recycled, the lower the methanol content in the overhead gas line **122**; however, increased condensate recycle will require more steam via line **146** for stripping. There is some small energy penalty from the relatively lower temperature in line **149**, but this is largely offset by less steam from the steam header required for a fixed amount of steam in line **149** to be supplied to the reformer (not shown).

### EXAMPLE

A syngas conditioning unit for a 1000 metric tons per day ammonia plant was simulated to compare a conventional conditioning unit (with high methanol emissions in the CO₂ vent) with a syngas conditioning unit based on the principles of the present invention (with reduced methanol emissions in the CO₂ vent). The material balance for the simulation for the base case (Fig. 1) is presented in Table 1.

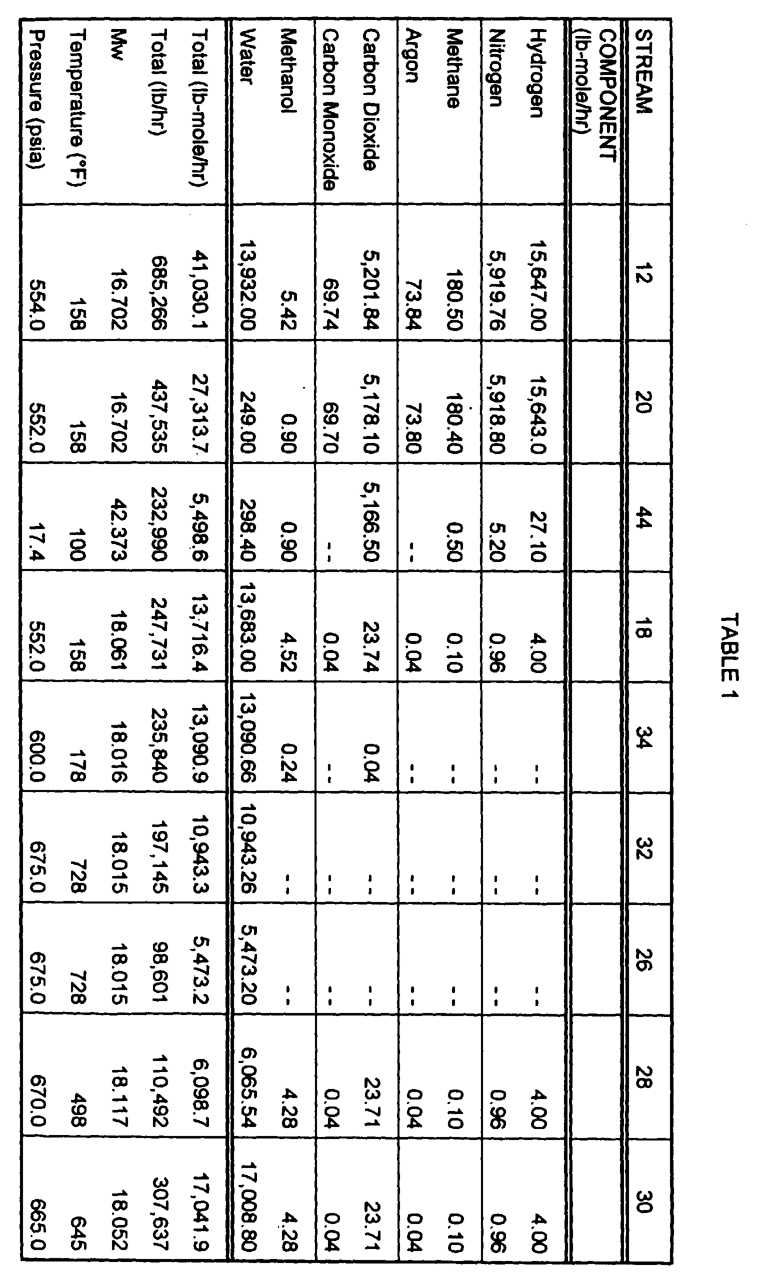

As seen in Table 1, the CO₂ vent line **44** contains the methanol from the overhead line **20**. The CO₂ vent line has about 125 ppmw methanol for a total annual discharge of about 115 metric tons per year.

Using the principles of the present invention, about 33% of the stripped condensate stream **152** is fed to the top of the raw gas separator **116** which has been modified to include a water wash bed **118**. No new equipment is needed for this configuration. The height of the separator **116** is roughly 3.35 times the height of the base case separator **16** to include the water wash bed **118**, but the diameter is unchanged. The diameter of the condensate stripper **144** is roughly 15% greater than the base case condensate stripper **22** to accommodate the greater volume of condensate stripping. The heat transfer area of exchanger **140** is similarly roughly 31% greater than that of the base case heat exchanger **24**, and the capacity of pump **138** is also roughly 31% greater than the base case pump **19**. The cooler **114** has about the same size and duty as the base case cooler **14** (for simplicity in simulation, the raw gas is cooled to 153°F, versus 158°F in the base case, to obtain the same overhead temperature (158°F) in line **122** as in line **20**). The results of the simulation are presented in Table 2.

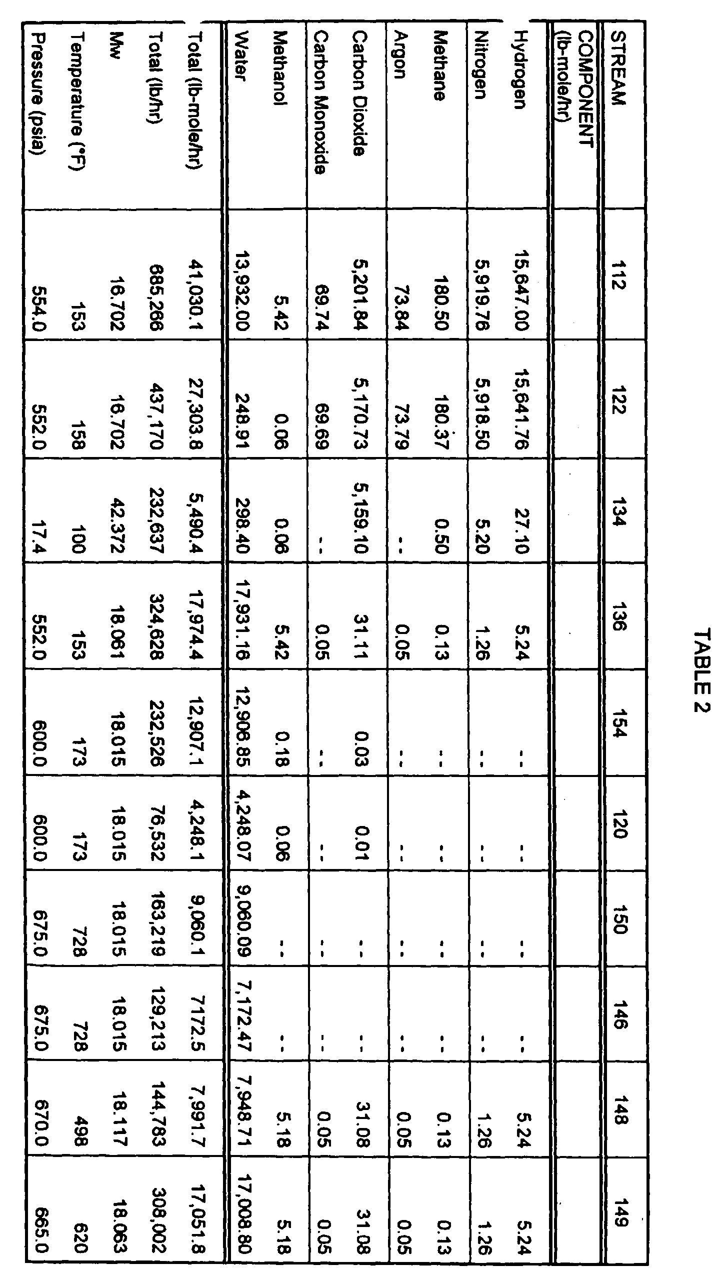

As seen in Table 2, the amount of methanol in the CO₂ vent line **134** is reduced to about 8 ppmw, and the total annual discharge to less than 8 metric tons.

Methanol emissions in the CO₂ vent from a synthesis gas unit in an ammonia or hydrogen plant are reduced by contacting raw synthesis gas from a low temperature shift converter with recycled stripped condensate to absorb methanol. The synthesis gas is treated in a purification unit to form the CO₂ vent of reduced methanol content. The condensate from the contacting step is steam stripped to form a process steam stream suitable for feed to the reformer and a stripped process condensate stream suitable for offsites polishing, a portion of which is recycled for contacting the raw synthesis gas.

## Claims

1. A method for processing a raw synthesis gas stream to minimize methanol emissions, comprising the steps of:
(a) contacting the raw synthesis gas stream with condensate to form an overhead synthesis gas stream of reduced methanol content and a condensate stream enriched in methanol;
(b) steam stripping the methanol-enriched condensate stream to form a process steam stream enriched in methanol and a stripped condensate stream of reduced methanol content;
(c) recirculating a portion of the stripped condensate stream for the contacting step (a);
(d) treating the overhead gas stream in a purification unit to form a CO₂- rich stream essentially free of methanol and a synthesis gas stream of reduced CO₂ content.

2. The method of claim 1 wherein the stripped condensate contains less than 100 ppm methanol.

3. The method of claim 1 wherein the stripped condensate contains about 25 ppm methanol or less.

4. The method of claim 1 comprising the step of indirectly exchanging heat between the stripped condensate stream and the methanol-enriched condensate stream.

5. The method of claim 1 wherein the recirculated portion of the stripped condensate in step (c) comprises from 10 to 50 weight percent of the stripped condensate stream from step (b).

6. The method of claim 1 wherein the treating step (d) comprises the steps of (1) contacting the overhead gas stream with a CO₂ absorbent to form a CO₂-rich absorbent stream, and (2) stripping the CO₂-rich absorbent stream to obtain a CO₂-lean absorbent stream for recirculation to step (1).

7. The method of claim 1 wherein the purification unit comprises pressure- swing adsorption.

8. A unit for processing raw synthesis gas to produce a synthesis gas stream of reduced water and CO₂ content, a CO₂ stream essentially free of methanol, a stripped condensate stream essentially free of hydrocarbons and other impurities, and a process steam stream suitable for feed to a reformer, comprising:
a raw gas separator including a water wash section for contacting a raw synthesis gas stream with stripped condensate to form an overhead synthesis gas stream of reduced methanol content and a condensate stream enriched with methanol;
a process condensate stripper for contacting the methanol-enriched condensate stream with steam to form a process steam stream overhead and a bottoms stream comprising stripped condensate;
a line for recirculating a portion of the stripped condensate stream from the process condensate stripper to the raw gas separator;
a purification unit for treating the overhead synthesis gas stream from the raw gas separator to form a CO₂-lean synthesis gas stream and a CO₂-rich stream.

9. The unit of claim 8 comprising a heat exchanger for indirectly exchanging heat between the bottoms stream from the process condensate stripper and the methanol-enriched condensate stream.

10. The unit of claim 8 wherein the purification unit comprises an absorber-stripper unit.

11. The unit of claim 8 wherein the purification unit comprises a mole-sieve unit.

12. In a method for processing a raw synthesis gas stream comprising the steps of (1) separating condensate from the raw synthesis gas stream to produce a condensate stream and a synthesis gas stream of reduced water content, (2) treating the synthesis gas stream in a purification unit to form a CO₂-lean synthesis gas stream and a CO₂-rich stream, and (3) steam stripping the condensate stream from step (1) to form a process steam stream suitable for reforming and a stripped process condensate stream, the improvement wherein the synthesis gas stream upstream from the purification unit is contacted with a portion of the stripped process condensate stream effective to substantially reduce the methanol content of the CO₂ stream from step (2) and produce a methanol-enriched condensate stream.

13. The improvement of claim 12 wherein the stripped process condensate stream comprises less than 100 ppm methanol.

14. The improvement of claim 12 wherein the stripped process condensate stream comprises about 25 ppm methanol or less.

15. The improvement of claim 12 wherein the methanol-enriched condensate stream is heated by indirect heat exchange against the stripped process condensate from step (4).

16. The improvement of claim 12 wherein the portion of the stripped process condensate stream with which the raw synthesis gas stream is contacted comprises from 10 to 50 weight percent of the stripped process condensate stream.

17. The improvement of claim 12 wherein the purification unit comprises an absorber-stripper unit.

18. The improvement of claim 12 wherein the purification unit comprises a mole-sieve unit.
